# EUROPÄISCHE PATENTSCHRIFT

(11) **EP 1 001 139 B1**
(45) Veröffentlichungstag und Bekanntmachung des Hinweises auf die Patenterteilung: **07.01.2004**
(21) Anmeldenummer: 98811124.1
(22) Anmeldetag: 10.11.1998
(51) Int. Cl.: F01D 11/08, F16J 15/447

(54) **Spitzendichtung für Turbinenlaufschaufeln**
Turbine blade tip sealing
Dispositif d'étanchéité pour les extrémités des aubes de turbine

(43) Veröffentlichungstag der Anmeldung: 17.05.2000
(73) Patentinhaber: ALSTOM (Switzerland) Ltd, 5401 Baden (CH)
(72) Erfinder: Kreitmeier, Franz, 5400 Baden (CH)

(56) Entgegenhaltungen:
- EP-A- 0 903 468
- US-A- 4 662 820
- US-A- 5 026 075
- PATENT ABSTRACTS OF JAPAN vol. 006, no. 093 (M-133), 29. Mai 1982 & JP 57 028810 A (HITACHI LTD), 16. Februar 1982

## Beschreibung

### Technisches Gebiet

Die Erfindung betrifft eine Labyrinthdichtung zwischen den Laufschaufeln und dem Gehäuse einer axial durchströmten Turbomaschine, bei der die Laufschaufeln mit Deckbändern und das Turbinengehäuse mit Dichtstreifen versehen sind. Die Erfindung betrifft insbesondere die Abdeckung der Kavität, die am Eingang der Labyrinthdichtung vom Deckband einer Laufschaufel und dem Turbinengehäuse gebildet wird, und die Verbesserung der Strömungsverhältnisse am Strömungseintritt jener Laufschaufel.

### Stand der Technik

Labyrinthdichtungen mittels Dichtstreifen und Deckbändern sind allgemein bekannt. Sie dienen der Reduzierung des Spaltverlusts durch Verminderung des Spaltmassenstroms zwischen dem Laufschaufelende und dem konisch ausgebildeten Turbinengehäuse. Hierfür wird die Dichtwirkung erhöht, beispielsweise durch eine Labyrinthdichtung bestehend aus mehreren Dichtstreifen und einer stufenweisen Ausbildung der Deckbänder, wie es in der schweizerischen Patentschrift CH 589 787 beschrieben ist.

Der Verschmälerung des radialen Spaltes zwischen Deckbändern und Turbinengehäuse sowie des axialen Spaltes zwischen der Laufschaufel und einem benachbartem Leitschaufelfuss sind jedoch konstruktive und betriebliche Grenzen gesetzt. Damit die stationären und rotierenden Turbinenteile ohne Anstreifen aneinander vorbeigleiten, muss sich zwischen ihnen ein Spalt befinden, der so bemessen ist, dass den unterschiedlichen thermischen Dehnungen der Turbinenteile während des Normalbetriebs sowie während des An- und Abfahrens der Turbine genug Spiel gewährt ist.
Bekannte Turbinen weisen einerseits zwischen den stehenden und beweglichen Teilen einen axialen Abstand auf, der diesen thermischen Dehnungen das nötige Spiel erlaubt. Um das Risiko von Schäden durch Anschlagen der Turbinenteile weiter zu vermindern, weisen sie anderseits einen zusätzlichen Sicherheitsabstand auf. Die Differenz zwischen der Ausdehnung des Rotors und der des Gehäuses hängt von der Temperatur und dem Druck des Dampfes sowie auch von der Grösse der Turbine ab. Deshalb sind die erwähnten Spaltabstände bei Turbinen höherer Leistung sowie Niederdruckturbinen mit grossem Konuswinkel besonders ausgeprägt.

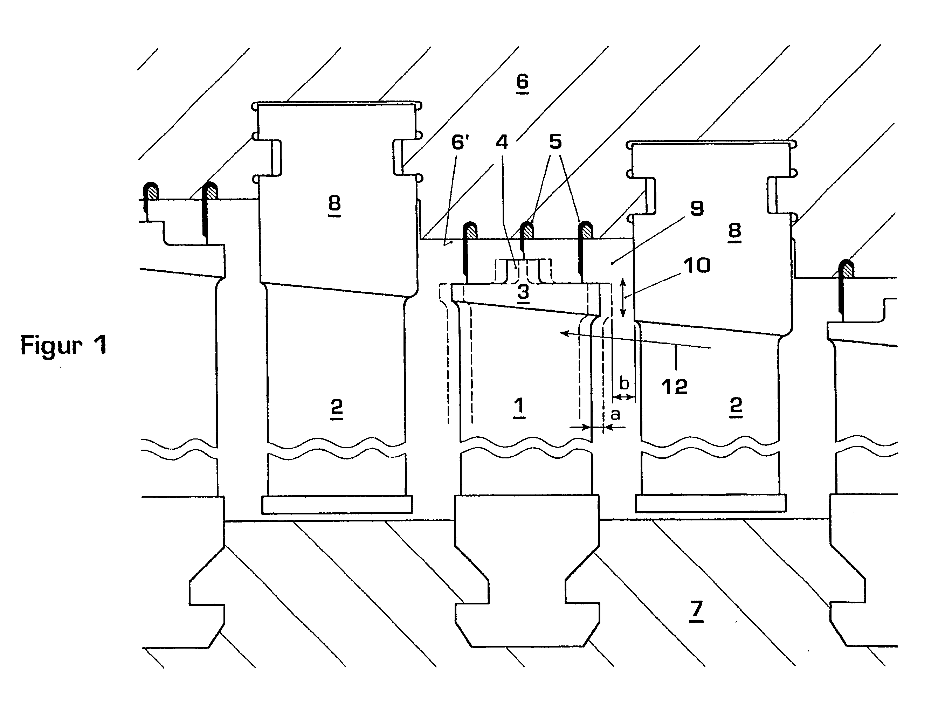

In einer bekannten Labyrinthdichtung der Anmelderin, wie sie nachfolgend in Figur 1 gezeigt ist, befindet sich eintrittsseitig der Laufschaufel eine Kavität, welche durch das Deckband, den ersten Dichtstreifen der Labyrinthdichtung, den Leitschaufelfuss und durch die Eindrehung im Turbinengehäuse, in welche das Deckband der Laufschaufel eingreift, gebildet wird. Zwischen der Hauptströmung auf den Leit- und Laufschaufeln und dieser Kavität ergeben sich druckfeldgetriebene Querströmungen, welche aufgrund der grossen Tiefe und Breite der Kavität die Hauptströmung der Turbine ungünstig beeinträchtigen.
Die Tiefe der Kavität ergibt sich in den meisten Fällen aus konstruktiven und fertigungstechnischen Gründen. Die Breite setzt sich zunächst aus einem notwendigen Anteil zum Ausgleich transienter Dehnungsdifferenzen und einem Sicherheitsabstand zusammen. In den einen Fällen enthält die Breite zusätzlich einen Kupplungsversatz, der bei der Montage notwendig ist. Die Breite der Kavität ist zudem bei Frontstufen von ersten und zweiten Niederdruckteilturbinen unnötig ausgeprägt. Die Axialabstände zwischen den Leit- und Laufschaufeln sind bei allen Fluten der Niederdruckteilturbinen aus technischen und Kostengründen oft gleich. Die transienten Differenzdehnungen sind jedoch bei den verschiedenen Fluten stark unterschiedlich, so dass die Breite der Kavität bei den einen Schaufeln unnötig breit ausfallen und Quer- sowie Spaltströmungen unnötig hoch ausfallen.
Bei Nassdampfstufen bilden sich ausserdem am Leitschaufelfuss zu Beginn der Kavität grosse Tropfen, welche am Ansatz des Deckbands am Laufschaufelblatt zu Erosionsschäden führen und das Deckband sogar ablösen können.

### Darstellung der Erfindung

Angesichts des beschriebenen Standes der Technik ist der Erfindung die Aufgabe gestellt, in einer Turbomaschine die ungünstigen Querströmungen zwischen der Kavität am Eintritt in die Labyrinthdichtung an einer Laufschaufel zu vermindern und die Tropfenschlagerosion im Bereich des Übergangs vom Laufschaufelblatt zum Deckband zu reduzieren.

Diese Aufgabe wird erfindungsgemäss durch eine Turbomaschine gemäss dem Oberbegriff des Anspruchs 1 gelöst, die zur Verschmälerung des Eintritts in die Kavität am Strömungseintritt in die Labyrinthdichtung einen flexiblen Dichtstreifen aufweist, der axial orientiert den Eintritt in die Kavität mindestens teilweise abdeckt.

Zwischen der Endkante des Dichtstreifens und der Laufschaufel besteht dabei ein Abstand, der die transienten Differenzdehnungen gewährt. Zwecks Führung der Hauptströmung verläuft ferner der Dichtstreifen im Eintritt zur Kavität in einem Winkel zur Welle, der dem Konuswinkel des Turbinengehäuses entspricht.

Der Dichtstreifen ist in einer Ausführung gegenüber dem Deckband am Turbinengehäuse befestigt und verläuft den Kavitätswänden entlang, indem er entsprechend gekrümmt ist, und erstreckt sich schliesslich auf radialer Höhe des Ansatzes des Deckbandes in den Kavitätseintritt hinein, wobei der Dichtstreifen auf den Ansatz des Dackbandes der Laufschaufel hin gerichtet ist.

In einer bevorzugten Ausführung der Erfindung ist der Dichtstreifen zur Abdeckung des Kavitätseintritts an einem Einzug am Turbinengehäuse befestigt, welcher das Volumen der Kavität verkleinert und Querströmungen reduziert.

Der erfindungsgemässe Dichtstreifen dient dazu, den Eintritt in die Kavität so weit zu verschmälern, dass nur noch die transiente Differenzdehnung ohne Anstreifung des Dichtstreifens am Deckband gewährt ist. Der Sicherheitsabstand sowie allfällige Restabstände zwischen Lauf- und Leitschaufel ist vom Dichtstreifen im Bereich des Kavitätseintritts abgedeckt. Im seltenen Fall, dass ein solcher Sicherheitsabstand doch nötig werden sollte, wird der nahezu axial orientierte Dichtstreifen abgerieben, ohne Schaden an den Schaufeln anzurichten. Der erfindungsgemässe Dichtstreifen verläuft grundsätzlich axial, ist aber entsprechend dem Konuswinkel des Turbinengehäuses angewinkelt. Dies dient dazu, dass die Hauptströmung zwischen einer Leitschaufel und Laufschaufel oder zu Beginn einer Flut zur ersten Laufschaufel optimal geführt wird.

Zwar ist in der amerikanischen Patentschrift US 4,662,820 eine Labyrinthdichtung beschrieben, bei der die eintrittsseitige Kavität der Labyrinthdichtung mittels einer am Turbinengehäuse befestigten Vorrichtungen und radialen Dichtstreifen verkleinert wurde. Bei dieser Vorrichtung handelt es sich um solide Teile ("solid substance"), die in radialer Richtung von der Welle weiter entfernt sind als die Oberfläche des Deckbands, sodass im Fall einer thermischen Dehnung die Vorrichtung nicht anstreift. Bei der hier beschriebenen Erfindung hingegen, wird in erster Linie der Eintritt zur Kavität mittels eines flexiblen Dichtstreifens, der sich auf Höhe des Ansatzes des Deckbands befindet, verschmälert.
Es sind dabei keine Massnahmen erforderlich, um ein Anstreifen des Dichtstreifens am Deckband zu vermeiden. Dank der axialen Orientierung des Dichtstreifens verursacht ein Anstreifen des Dichtstreifens keinen Schaden an den Schaufelblättern oder am Deckband.
In der besonderen Ausführung der Erfindung ist der axiale Dichtstreifen an einem Gehäuseeinzug zur Verkleinerung der Kavitätstiefe befestigt. Die Massnahme zur Verschmälerung der Breite des Kavitätseintritts ist hierdurch mit einer Massnahme zur Reduzierung der Kavitätstiefe verbunden.

Die EP 0 903 468 offenbart in seiner Figur 6 eine Labyrinthdichtung mit einem Dichtstreifen 52, der eine Kavität 40c abdeckt. Der Dichtstreifen 52 steht dort mit der Oberfläche des Deckbandes der Laufschaufel in Berührung, weshalb er auf der radialen Höhe der Oberfläche jenes Deckbandes angeordnet ist. Er ist also, im Vergleich zum Dichtstreifen der vorliegenden Erfindung radial weiter aussen angeordnet Es bleibt dann dort eine Eingangskavität übrig, die für die Arbeitströmung der Turbine offen bleibt und Querströmungen erlaubt. Der Dichtstreifen gemäss der vorliegenden Erfindung ist im Gegensatz zu jenem der EP 0 903 468 auf den Ansatz des Deckbandes gerichtet und ist deshalb radial weiter innen angeordnet. Die Kavität ist also auf Höhe ihres Eingangs teilweise abgedeckt, wodurch, zusammen mit seiner Ausrichtung gemäss dem Konuswinkel des Turbinengehäuses, die Turbinenströmung gleichmässig strömen kann und Queströmungen in die Kavität verhindert werden.

Der Vorteil der Erfindung liegt in der Verkleinerung der Eintrittsbreite der Kavität zwischen den rotierenden und stationären Teilen, indem der Sicherheitsabstand abgedeckt und lediglich Raum für die transienten Dehnungen gewährt wird. Dabei sind jedoch die Sicherheit und Zuverlässigkeit der Maschine im Fall eines Anstreifens des Dichtstreifens an der Laufschaufel nicht beeinträchtigt.
Durch die Verkleinerung des Kavitätseintritts wird einerseits die Querströmung mit der Hauptströmung vermindert und anderseits der Spaltmassenstrom reduziert. Weiter erfährt die Hauptströmung am nahezu axialen Dichtstreifen eine verbesserte Führung zur Laufschaufel, indem Verwirbelungen in der Kavität grösstenteils vermieden werden. Schliesslich ist durch das schmale Profil des Dichtstreifens die Grösse der Tropfen, die sich am Ansatz des Deckbands der Laufschaufel niederschlagen, stark verkleinert. Dadurch sind Erosionsschäden, welche von der Tropfengrösse bestimmt werden, im Bereich des Deckbandansatzes ebenfalls stark vermindert.

### Kurze Beschreibung der Zeichnungen

Es zeigen Figuren 1 bis 6 Meridianschnitte durch eine axial durchströmte thermische Turbomaschine mit Labyrinthdichtungen. Davon zeigen
Figur 1: eine Labyrinthdichtung an einer Laufschaufel einer Hochdruckturbine gemäss des Standes der Technik,
Figur 2: eine erfindungsgemässe Labyrinthdichtung an einer Laufschaufel derselben Hochdruckturbine von Figur 1, für den Fall einer Nachrüstung,
Figur 3, 3a, 3b und 3c: eine Labyrinthdichtung an einer Laufschaufel der Hochdruckturbine von Figur 1 gemäss einer bevorzugten Ausführung der Erfindung,
Figuren 4a und 4b: zwei verschiedene Ausführungen von Labrinthdichtungen an Laufschaufeln der ersten Teilturbine einer Niederdruckturbine,
Figur 5 a und 5b: zwei verschiedene Ausführungen von Labyrinthdichtungen an Laufschaufeln der dritten Teilturbine einer Niederdruckturbine,
Figur 6a: eine Labyrinthdichtung an der vorletzten Laufschaufel einer Niederdruckturbine,
Figur 6b: eine weitere Variante einer Labyrinthdichtung an der vorletzten Laufschaufel einer Niederdruckturbine.

Bei sämtlichen Figuren ist die Strömungsrichtung des Arbeitsmediums der Turbomaschine mit Pfeilen angedeutet. In den verschiedenen Figuren sind jeweils gleiche Elemente mit den gleichen Bezugszeichen versehen.

### Weg der Ausführung der Erfindung

In Figur 1 ist eine Hochdruckturbine des Standes der Technik dargestellt, wovon eine Laufschaufel 1 und ihr benachbarte Leitschaufeln 2 gezeigt sind. Die Laufschaufel 1 ist mit einem Deckband 3 versehen, das in der Mitte eine Stufe 4 aufweist. Gegenüber dem Deckband 3 sind am Turbinengehäuse 6 gerade, radiale Dichtstreifen 5 befestigt, die den radialen Dichtspalt gegenüber dem Deckband 3 bilden. Das Deckband 3 und die Dichtstreifen 5 bilden eine Labyrinthdichtung, welche die Spaltströmung zwischen der Laufschaufel 1 und dem Turbinengehäuse 6 reduziert. Am Strömungseintritt der Laufschaufel 1, zwischen dem Turbinengehäuse 6, dem Leitschaufelfuss 8 und dem Deckband 3 besteht eine Kavität 9. Am Eintritt zur Kavität 9 ergibt sich ein druckfeldgetriebener Queraustausch mit der Hauptströmung 12, welcher den Wirkungsgrad der Turbine beeinträchtigt. Der Queraustausch wird durch die Breite des Kavitätseintritts, der einen Abstand a zur Gewährung der Differenzdehnung, einen Sicherheitsabstand b sowie konstruktiv bedingte Restabstände wie einen Kupplungsversatz und weitere zusätzliche Axialabstände miteinbezieht, begünstigt. Die strichlierten Linien bedeuten dabei die Positionen der Laufschaufel relativ zum Rotor und Gehäuse beim Anfahren und beim Abfahren der Turbomaschine; die ausgezogenen Linien bedeuten die relative Position während des Turbinenbetriebs.

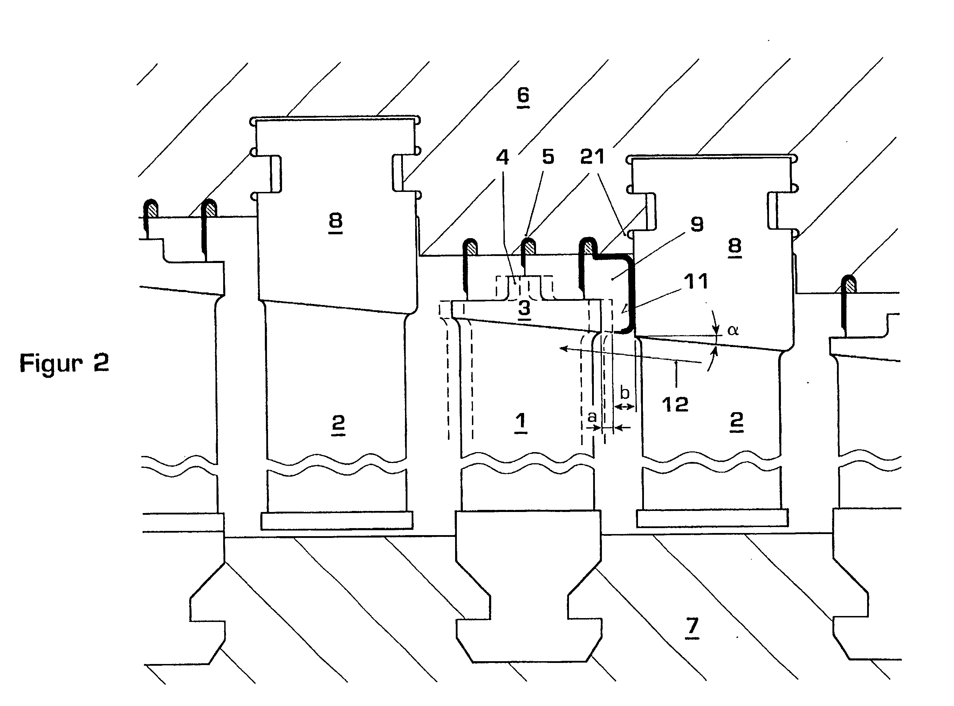

Figur 2 zeigt eine erste Ausführung der erfindungsgemässen Labyrinthdichtung an einer Laufschaufel 1 am Beispiel der Hochdruckturbine von Figur 1. Diese Ausführung eignet sich besonders für eine Nachrüstung der in Figur 1 gezeigten Turbomaschine. Am Turbinengehäuse 6 ist gegenüber dem Strömungseintritt der Kavität (anstelle des in Figur 1 mit 5 bezeichneten Dichtstreifens 5) ein Dichtstreifen 11 befestigt, der in der bestehenden Nut eingestemmt ist. Die eine Seite des Dichtstreifens 11 verläuft gerade zum Deckband 3 hin während die andere Seite des Dichtstreifens 11 zunächst axial der Gehäusewand und dann in radialer Richtung dem benachbarten Leitschaufelfuss 8 entlang verläuft. Schliesslich verläuft er in Richtung des Deckbands 3 mit einem Winkel zur Welle 7, der dem Konuswinkel a entspricht. Letzterer Teil des Dichtstreifens 11 bis zu seiner Endkante deckt den Eintritt zur Kavität 9 über der mit b bezeichneten Breite ab. Die Breite b entspricht dem Sicherheitsabstand, der in Turbinen des Standes der Technik zwischen den stationären und rotierenden Teilen vorausgesetzt wird. Die Eintrittsbreite zur Kavität ist erfindungsgemäss um die Breite b auf die mit a bezeichnete Breite reduziert, wobei die Breite a die Differenzdehnung zwischen den stationären und beweglichen Teilen bedeutet. (Die strichlierten Linien bedeuten wiederum die relativen Positionen der Laufschaufel beim An- und Abfahren der Maschine, die ausgezogenen Linien die während des Betriebs.) Querströmungen können sich also nur noch über der Breite a, also über dem transienten Dehnungsabstand, bilden. Auch der Spaltmassenstrom ist durch die Verschmälerung des Eintritts reduziert.
Der Winkel des Endteils des Dichtstreifens 11 zur Welle 7 ist dem Konuswinkel α der Turbine angepasst. Die Hauptströmung 12 gelangt dadurch mit verbesserter Führung zur Laufschaufel, indem sie weniger Verwirbelungen erfährt.
Tropfen, die sich bei einer Nassdampfstufe im Bereich der Krümmung des Dichtstreifens 11 am Eintritt zu Kavität 9 bilden, werden dank der kleinen Dicke des Streifens in sehr kleine Tröpfchen versprüht. Ihrer kleinen Grösse entsprechend verursachen diese nur sehr kleine Erosionsschäden an der Laufschaufel.

Im Abstand a für die Differenzdehnung ist auch ein Abstand für einen Kupplungsversatz einbezogen, der insbesondere bei der Montage der Hochdruckturbinen notwendig ist.
Der Dichtstreifen 11 ist in den hier und nachfolgend beschriebenen Ausführungen je nach Grösse des Dichtstreifens entweder durch Schrauben oder Einstemmen am Turbinengehäuse befestigt. Ein Anschrauben ist vor allem sinnvoll bei grösseren Dichtstreifen, auf die grössere Kräfte wirken, und Einstemmen eignet sich eher für kleinere Dichtstreifen und Nachrüstungen. Weitere Befestigungen wie beispielsweise Punktschweissen oder Nieten sind gegebenenfalls auch ausführbar. Schliesslich ist auch eine Befestigung durch Einhängen des Dichtstreifens 11 in einer Ringnut 21 am Leitschaufelfuss 8 ausführbar.

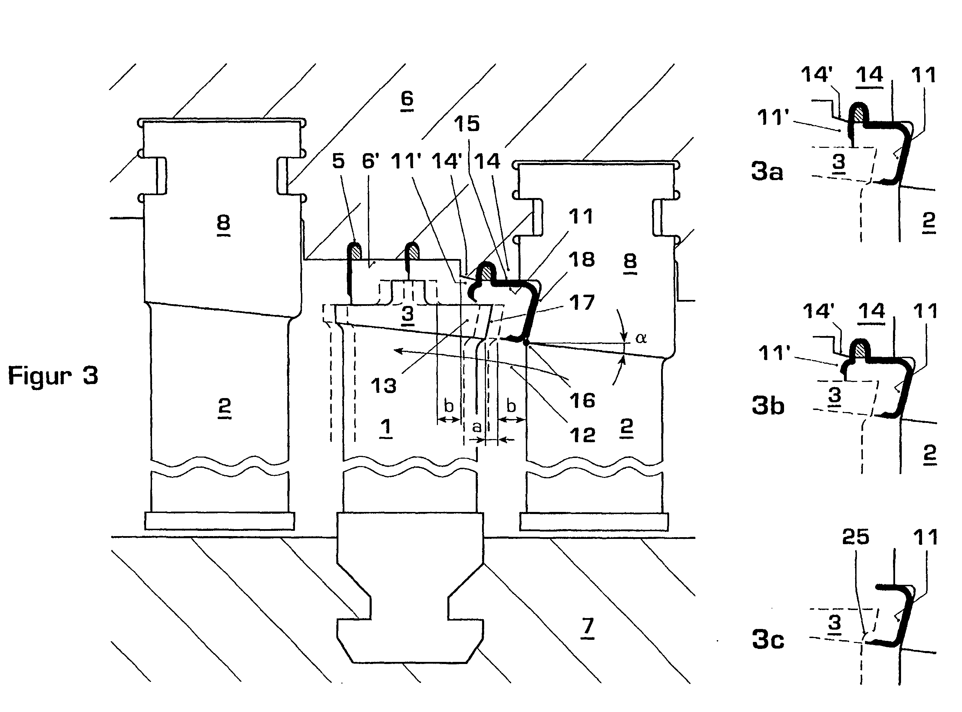

Figur 3 ist eine bevorzugte Lösung der eingangs gestellten Aufgabe am Beispiel einer Laufschaufel 1 einer Hochdruckturbine dargestellt. Während bei der vorangehend beschriebenen Ausführung der Dichtstreifen zur Verschmälerung des Eintritts zur Kavität 9 am Gehäuse angeordnet ist, ist der Dichtstreifen in dieser Ausführung an einem Gehäuseeinzug14 befestigt, welcher der Reduzierung der Kavitätstiefe dient. Der Einzug 14 ist Teil des Turbinengehäuses 6 und erstreckt sich vom benachbarten Leitschaufelfuss 8 stromabwärts in axialer Richtung. Entlang der Radialen erstreckt er sich von der Wand 6' des Turbinengehäuses 6 gegenüber dem Deckband 3 beispielsweise bis auf die halbe Distanz zwischen der Wand 6' und der Oberfläche des Deckbands 3. An der Seite 15 des Einzuges, welche der Welle 7 zugewandt ist, ist ein Dichtstreifen 11 beispielsweise durch Einstemmen befestigt. Ein Teil 11' des Dichtstreifens besitzt eine 180°-Krümmung und verläuft sodann axial entlang der Oberfläche des Deckbands 3. Die axiale Orientierung dieses Teils 11' ist wiederum vorteilhaft, indem ein Anstreifen das Deckband nicht beschädigt und im Fall von thermischen Dehnungen der Streifen sich vom Deckband wegbiegt. In einer Variante gemäss Figur 3a verläuft der Teil 11' des Dichtstreifens radial und gerade bis nahe an die Oberfläche des Deckbands 3. In einer weiteren Variante gemäss Figur 3b weist der Teil 11' eine 90°-Krümmung auf. Um thermische Dehnungen der 90°-Krümmung des Teils 11' in radialer Richtung zu gewähren, ist die Seite 14' des Einzugs 14 leicht angewinkelt.

Der restliche Teil des Dichtstreifens 11 verläuft stromaufwärts der Seite 15 entlang bis zum Leitschaufelfuss 8 und dann in radialer Richtung entlang dem Fuss 8 bis zu dessen Ansatz 16. Hier weist der Dichtstreifen 11 wiederum eine Krümmung auf und verläuft darauf stromabwärts in Richtung des Deckbands 3 mit einem Winkel zur Welle 7, der dem Konuswinkel α des Turbinengehäuses 6 an der Stelle entspricht. Der Dichtstreifen 11 deckt den Eintritt zur Kavität 9 über der Breite b (dem Sicherheitsabstand) bis auf die Breite a (der Differenzdehnung) ab.
Die Hauptströmung 12 wird wiederum vom Dichtstreifen 11 dank seines Winkels zur Welle 7 vorteilhaft geführt und vermindert verwirbelt. Zur weiteren Verminderung des Spaltmassenstroms und Verwirbelungen in der Kavität 9 weist das Deckband 3 einen Überhang 13 auf, dessen stromaufwärts gerichtete Seite 17 in einem leichten Winkel von der Radialen weg in Richtung des stromaufwärts benachbarten Leitschaufelfusses 8 verläuft. In dieser Ausführung weist die Kavität 9 weiter eine Einbuchtung 18 im Leitschaufelfuss 8 auf. Die Wand der Einbuchtung18 verläuft dabei parallel zur Seite 17 des Überhangs 13. Diese Form begünstigt wirksame Verwirbelungen und die Reduzierung der kinetischen Energie des Spaltmassenstroms in der Kavität.
In Figur 3c ist eine weitere Variante dargestellt, die in allen hier gezeigten Labyrinthdichtungen anwendbar ist. Das Deckband 3 weist an der dem Massenstrom zugewandten Seite eine leichte Einbuchtung auf, in die das Ende des Dichtstreifens 11 Platz findet. Der Dichtstreifen 11 wird hier entsprechend verlängert. Die Einbuchtung erlaubt dabei eine weitere Reduktion des Spaltmassenstroms.

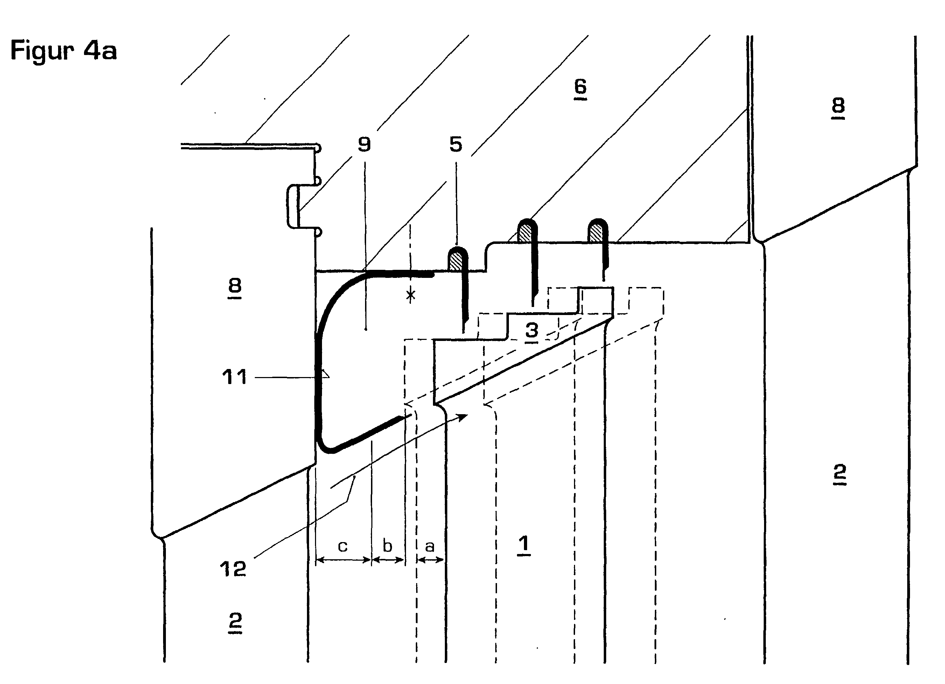

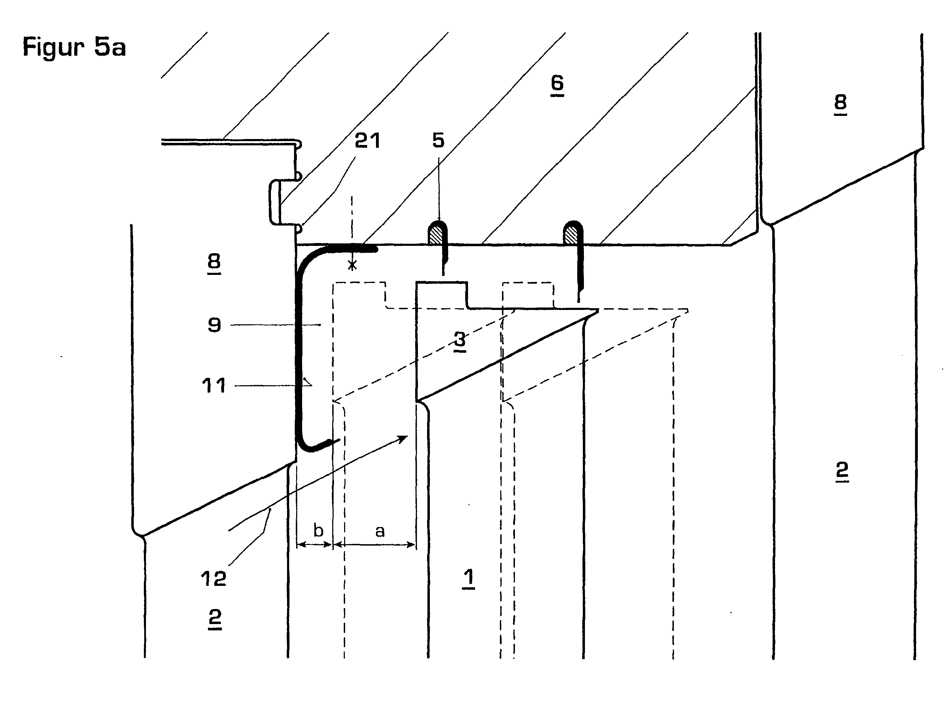

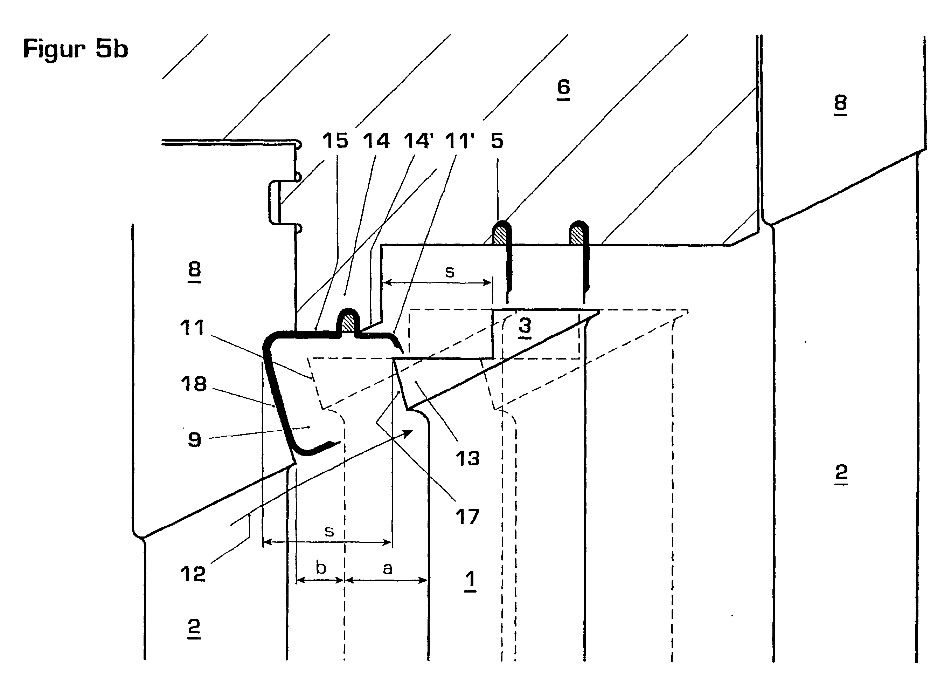

Figur 4a zeigt eine Laufschaufel 1 der ersten Teilturbine einer Niederdruckturbine. Wie eingangs erwähnt sind aus technischen und Kostengründen die Axialabstände zwischen Leit- und Laufschaufeln an Niederdruckturbinen während des Betriebs oft gleich. Da aber die Differenzdehnung bei der ersten Teilturbine im Vergleich zur dritten Teilturbine kleiner ist, sind die Abstände zwischen stationären und beweglichen Teilen in ihren relativen Extrempositionen (strichlierte Linien) grösser als bei der dritten Teilturbine (Figur 5a und b). Es stellt sich also das Problem, den Kavitätseintritt, der bei den verschiedenen Teilturbinen verschieden breit ausfällt, jeweils individuell abzudecken. Hierzu eignet sich der erfindungsgemässe Dichtstreifen 11, indem er auf einfache und kostengünstige Art und Weise dem Abstand zwischen den beweglichen und stationären Teilen in ihrer relativen Extremposition angepasst wird, sodass der Kavitätseintritt möglichst abgedeckt ist. In Figur 4a setzt sich der Abstand zwischen dem Deckband 3 und dem strömungsaufwärts angeordneten Leitschaufelfuss 8 aus dem Abstand a für die Differenzdehnung, dem Sicherheitsabstand b und dem Restabstand c zusammen, wobei der Abstand c durch den Standardaxialabstand zwischen Laufund Leitschaufeln der dritten Teilturbine dieser Niederdruckturbine gegeben ist. Der erfindungsgemässe Dichtstreifen 11 erlaubt in diesem Fall der ersten Teilturbine eine verbesserte Abdeckung des Eintritts zur Kavität 9 unter Beibehaltung der Turbinenkonstruktion mit standardisierten Axialabständen zwischen den Schaufeln. Diese Ausführung ist deshalb besonders für kostengünstige Nachrüstungen geeignet.

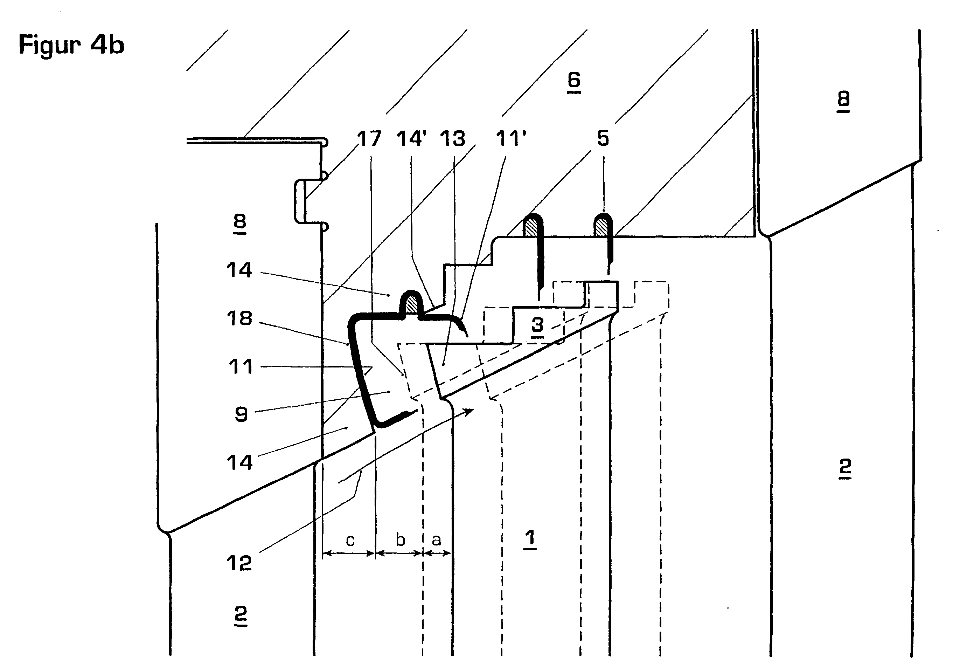

Figur 4b zeigt eine erweiterte und bevorzugte Ausführung der erfindungsgemässen Labyrinthdichtung für eine Laufschaufel der ersten Teilturbine. Die Ausführung ist der von Figur 4a ähnlich. Jedoch ist hier der Einzug 14 weiter ausgebildet, indem sein radial verlaufender Teil sich bis zum Ansatz des benachbarten Leitschaufelfusses 8 erstreckt und dort eine Breite gleich dem Abstand c besitzt. Die der Welle am nächsten liegende Seite des Einzugs 14 ist gemäss dem Konuswinkel der Teilturbine ausgebildet, um eine optimale (mit dem Pfeil 12 bezeichnete) Strömungsführung zu gewährleisten. Der Einzug 14 weist an der radial verlaufenden Wandung eine Einbuchtung 18 auf, die parallel zu der Abschrägung 17 des Deckbands 3 verläuft. Ein gekrümmter Dichtstreifen 11 ist an der axial verlaufenden Seite des Einzugs befestigt und verläuft der Wandung des Einzugs 14 entlang. Er deckt schliesslich den Eintritt zur Kavität 9 über den Sicherheitsabstand b ab. Ein Teil 11' des Dichtstreifens verläuft axial und parallel zur Oberfläche des Deckbands und ist schliesslich zum Deckband hin gebogen.

Um eine thermische Wegdehnung des axialen Teils 11' des Dichtstreifens in radialer Richtung zu gewähren, ist die der Welle zugewandten Seite 14' des Einzugs 14 leicht angewinkelt ausgebildet.

Figuren 5a und b stellen Ausführungen der Erfindungen am Beispiel von Laufschaufeln der dritten Teilturbine einer Niederdruckturbine dar. Figur 5a zeigt eine für Nachrüstungen geeignete Ausführung. Es sind die Positionen der Laufschaufel 1 mit Deckband 3 bezüglich der stationären Teile der Turbine gezeigt, wobei die strichlierten Linien die relativen Extrempositionen der Laufschaufel 1 und die ausgezogenen Linien die Position während des Betriebs zeigen. Die Laufschaufel 1 ist in einer relativen Extremposition vom Leitschaufelfuss 8 um den Sicherheitsabstand b beabstandet, um das Risiko eines Schadens durch Anstreifen zu minimieren. Die ausgezogenen Linien stellen die Position der Laufschaufel während des Normalbetriebs dar. Hier ist sie durch den Abstand b zuzüglich der Strecke a, der die Differenzdehnung gewährt, beabstandet. Der Dichtstreifen 11 ist entsprechend dem Abstand zwischen dem Leitschaufelfuss 8 und der Laufschaufel 1 in der relativen Extremposition bemessen.
Figur 5b zeigt eine weitere Ausführung des Eintritts zur Labyrinthdichtung einer Laufschaufel der dritten Teilturbine. Das Deckband 3 an dieser Laufschaufel 2 ist im Vergleich zu dem in Figur 5a veschieden gestuft. Die Eintrittspartie zur Kavität ist hier um eine Einbuchtung 18 im Leitschaufelfuss 8 sowie um einen Einzug 14 am Gehäuse erweitert. Ferner weist die erste Stufe des Deckbands 3 einen Überhang 13 auf, welche die Spaltströmung hemmt. Der Einzug 14 und die Einbuchtung 18 sind dabei so dimensioniert dass, der Abstand s zwischen dem Einzug 14 und der zweiten Stufe des Deckbands gleich dem Abstand s zwischen der radial verlaufenden Wand der Einbuchtung 18 und der ersten Stufe des Deckbands ist. An dem Einzug 14 ist ein gekrümmter Dichtstreifen 11 befestigt, der ähnlich wie in Figur 5a entlang der Wandung des Gehäuses und des ausgebuchteten Leitschaufelfusses 8 führt. Er erstreckt sich im Kavitätseintritt in einem Winkel gleich dem Konuswinkel der Teilturbine über die Breite des Sicherheitsabstands b hinweg. Der Dichtstreifen 11 besitzt ferner einen Teil 11', der sich stromaufwärts in axialer Richtung erstreckt und über der ersten Stufe des Deckbands 3 zum Deckband hin gebogen ist. Die Seite 14' des Einzugs ist zwecks der thermischen Dehnungen des Streifens 11' leicht angewinkelt. Der Durchgang zwischen Einzug 14 und Deckband 3 ist durch den axialen Dichtstreifenteil 11' weiter abgedeckt und die Labyrinthdichtung weiter vervollständigt.

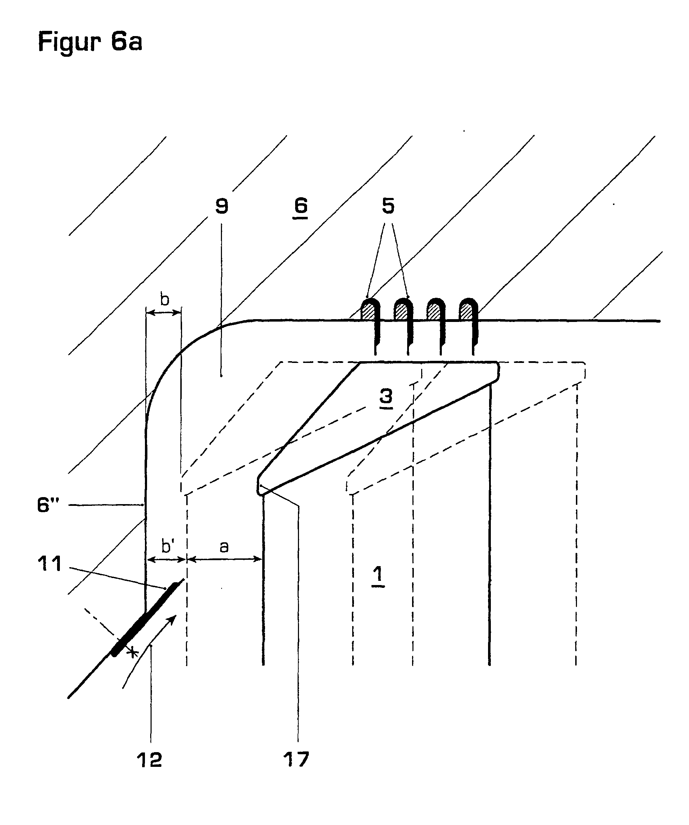

Figur 6a zeigt eine weitere Ausführung des erfindungsgemässen Dichtstreifens am Beispiel einer Nachrüstung der Labyrinthdichtung an der vorletzten Laufschaufel 1 einer Niederdruckturbine. Der Eintritt zur Kavität 9 zwischen der stromaufwärts gerichteten Seite 17 des Deckbands 3 und der radialen Wand 6" des Turbinengehäuses 6 besitzt eine Breite gleich dem Sicherheitsabstand b zwischen der Laufschaufel und dem Turbinengehäuse 6. Am Turbinengehäuse 6 ist vom Beginn des Kavitätseintritts leicht stromaufwärts ein Dichtstreifen 11 befestigt. Er verläuft in einem Winkel zur Welle entsprechend dem Konuswinkel an der Stelle des Turbinengehäuses 6 geradlinig über den Kavitätseintritt und deckt diesen über eine Breite gleich dem Abstand b' ab. Es verbleibt ein Abstand a zwischen der Endkante des Dichtstreifens 11 und der Seite des Deckbands 3, der die Differenzdehnung ohne Anstreifen gewährt.

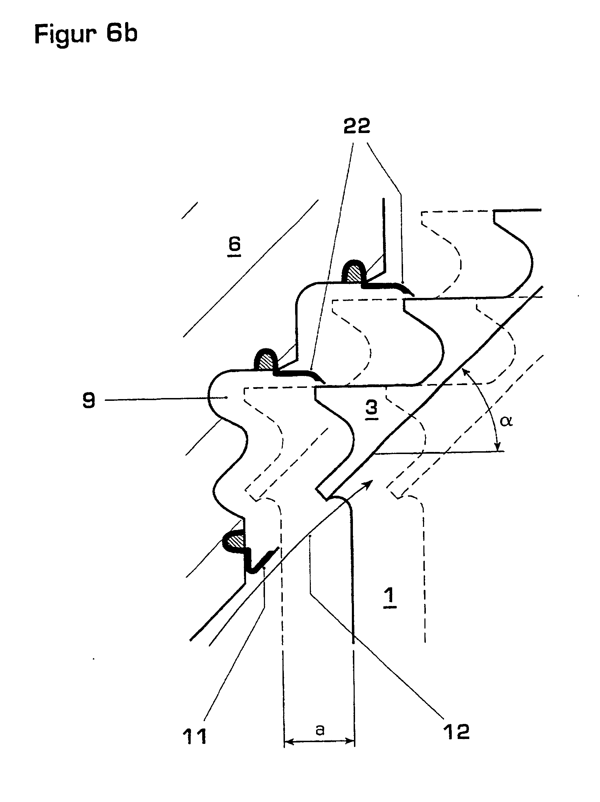

Figur 6b zeigt eine besondere Ausführung einer Labyrinthdichtung in der dritten Teilturbine einer Niederdruckturbine. Das Deckband 3 der Laufschaufel 1 ist mit mehreren Hinterstichen ausgebildet, wobei die Wandung des Turbinengehäuses 6 entsprechend der Kontur der Hinterstiche geformt ist. Am Gehäuse 6 sind auf der Höhe jedes Hinterstichs des Deckbands ein axialer Dichtstreifen 22 angeordnet, der über dem Deckband 3 zum Deckband hin gebogen ist. Die strichlierten Linien bedeuten wiederum die relativen Positionen der Schaufel bezüglich des Gehäuses 6 während des An- und Abfahrens der Turbine. Am Eintritt zur Kavität 9 weist die Labyrinthdichtung insbesondere einen Dichtstreifen 11 auf, der am Gehäuse 6 befestigt ist, und nach einer Krümmung den Eintritt zur Kavität 9 bis auf den Dehnungsabstand a abdeckt.

### Bezugszeichenliste

- 1: Laufschaufel
- 2: Leitschaufel
- 3: Deckband
- 4: Stufe
- 5: Dichtstreifen
- 6: Turbinengehäuse
- 6': axial verlaufende Wand des Turbinengehäuses
- 6": radial verlaufende Wand des Turbinengehäuses
- 7: Welle
- 8: Leitschaufelfuss
- 9: Eintrittsseitige Kavität
- 10: Querströmung
- 11: Axialer Dichtstreifen
- 11': Teil des Dichtstreifens über dem Deckband
- 12: Hauptströmung
- 13: Überhang des Deckbandes
- 14: Gehäuseseitiger Einzug
- 14': Seite des Einzugs
- 15: Seite des Einzuges der Welle zugewandt
- 16: Ansatz des Leitschaufelfusses
- 17: stromaufwärts gerichtete Seite des Deckbands, Abschrägung
- 18: Einbuchtung
- 21: Ringnut
- 22: axialer Dichtstreifen
- 25: Einbuchtung

- a: transienter Dehnungsabstand
- b: Sicherheitsabstand
- c: konstruktiv bedingter Restabstand

## Patentansprüche

1. Axial durchströmte Turbomaschine mit einem einen Konuswinkel aufweisenden Turbinengehäuse (6), in einer Welle (7) verankerten Laufschaufeln (1) und jeweils mittels einem Leitschaufelfuss (8) in dem Turbinengehäuse (6) verankerten Leitschaufeln (2), und jeweils einer Labyrinthdichtung zwischen den Laufschaufeln (1) und dem Turbinengehäuse (6), wobei jede Labyrinthdichtung ein an den Laufschaufeln (1) angeordnetes ringförmig ausgebildetes Deckband (3), einen oder mehrere am Turbinengehäuse (6), radial gegenüber dem Deckband (3) befestigte radial verlaufende, gerade Dichtstreifen (5) und am Strömungseingang in die Labyrinthdichtung eine Kavität (9) aufweist, die von dem Turbinengehäuse (6), dem ersten radialen Dichtstreifen (5), dem Deckband (3) und einer stromaufwärts benachbarten Wandung gebildet ist
**dadurch gekennzeichnet, dass**
die Kavität (9) zur Abdeckung ihres Strömungseintritts einen weiteren Dichtstreifen (11) aufweist, der flexibel ausgebildet ist und in axialer Orientierung den Strömungseintritt zur Kavität (9) zwischen der stromaufwärts der Laufschaufel (1) benachbarten Wandung und der stromaufwärts gerichteten Seite (17) des Deckbands (3) mindestens teilweise abdeckt, wobei der weitere flexible Dichtstreifen (11) zum Ansatz des Deckbandes (3) der Laufschaufel (1) hin gerichtet ist und in einem Winkel zur Welle (7) verläuft, der dem Konuswinkel des Turbinengehäuses (6) entspricht

2. Axial durchströmte Turbomaschine nach Anspruch 1
**dadurch gekennzeichnet, dass**
zwischen der Endkante des Dichtstreifens (11) zur Abdeckung des Strömungseintritts zur Kavität (9) und der Laufschaufel (1) ein Abstand (a) besteht, der eine Differenzdehnung zwischen den stationären und rotierenden Teilen der Turbomaschine gewährt.

3. Axial durchströmte Turbomaschine nach Anspruch 2
**dadurch gekennzeichnet, dass**
der Dichtstreifen (11) zur Abdeckung des Strömungseintritts zur Kavität (9) am Turbinengehäuse (6) radial gegenüber dem Deckband (3) befestigt ist und gekrümmt ausgebildet ist, indem er sich entlang der Wandung der Kavität (9) und über den Strömungseintritt der Kavität (9) erstreckt.

4. Axial durchströmte Turbomaschine nach Anspruch 2
**dadurch gekennzeichnet, dass**
die Kavität (9) sich am Eintritt zur Labyrinthdichtung der vorletzten Laufschaufel (1) einer Teilturbine befindet und der Dichtstreifen (11) zur Abdeckung des Strömungseintritts zur Kavität (9) stromaufwärts von der ersten Laufschaufel (1) am Turbinengehäuse (6) befestigt ist.

5. Axial durchströmte Turbomaschine nach Anspruch 2
**dadurch gekennzeichnet, dass**
das Turbinengehäuse (6) mit einem Einzug (14) ausgebildet ist, der in die Kavität (9) ragt und vom Leitschaufelfuss (8) sich stromabwärts erstreckt, und der Dichtstreifen (11) zur Abdeckung des Strömungseintritts in die Kavität (9) an der Seite (15) des Einzugs (14) befestigt ist, die der Welle (7) zugewandt ist.

6. Axial durchströmte Turbomaschine nach einem der Ansprüche 3 oder 5
**dadurch gekennzeichnet, dass**
von der Befestigung des Dichtstreifens (11) zur Abdeckung des Strömungseintritts zur Kavität (9) ein Teil (11') des Dichtstreifens (11) sich vom Einzug (14) in Richtung der Oberfläche des Deckbands (3) erstreckt und gegen das Deckband (3) dichtet.

7. Axial durchströmte Turbomaschine nach Anspruch 6
**dadurch gekennzeichnet, dass**
der Teil (11') des Dichtstreifens (11), der sich zum Deckband (3) erstreckt, gerade und radial verläuft.

8. Axial durchströmte Turbomaschine nach Anspruch 6
**dadurch gekennzeichnet, dass**
der Teil (11') des Dichtstreifens (11), der sich zum Deckband (3) erstreckt eine Krümmung von bis zu 180° aufweist.

9. Axial durchströmte Turbomaschine nach Anspruch 8
**dadurch gekennzeichnet, dass**
zur Gewährung von thermischen Wegdehnungen des gekrümmten Teils (11') des Dichtstreifens (11) in radialer Richtung die Seite (14') des Einzugs (14) zum Gehäuse (6) hin angewinkelt ist.

10. Axial durchströmte Turbomaschine nach Anspruch 9
**dadurch gekennzeichnet, dass**
das Deckband (3) an seiner stromaufwärts gerichteten Seite (17) einen Überhang (13) aufweist, der von der Radialen weg in Richtung. des stromaufwärts benachbarten Leitschaufelfusses (8) angewinkelt ist.

11. Axial durchströmte Turbomaschine nach Anspruch 10
**dadurch gekennzeichnet, dass**
der benachbarte Leitschaufelfuss (8) eine Einbuchtung (18) aufweist und der Dichtstreifen (11) entlang der Wandung der Einbuchtung (18) verläuft.

12. Axial durchströmte Turbomaschine nach Anspruch 11
**dadurch gekennzeichnet, dass**
das Deckband (3) an seiner stromaufwärts gerichteten Seite an seinem Ansatz eine Einbuchtung (25) aufweist, die dem Ende des Dichtstreifens (11) zur Abdeckung des Eintritts der Kavität (9) Platz gewährt.

13. Axial durchströmte Turbomaschine nach einem der Ansprüche 3 bis 5
**dadurch gekennzeichnet, dass**
der Dichtstreifen (11) zur Abdeckung des Strömungseintritts zur Kavität (9) eingestemmt, genietet, punktgeschweisst oder angeschraubt ist.

## Claims

1. Axial-flow turbomachine comprising a turbine casing (6) having a cone angle, moving blades (1) anchored in a shaft (7) and guide blades (2) anchored in each case by means of a guide-blade root (8) in the turbine casing (6), and in each case a labyrinth seal between the moving blades (1) and the turbine casing (6), each labyrinth seal having an annular shroud (3) arranged on the moving blades (1), one or more radially running, straight sealing strips (5) fastened to the turbine casing (6) radially opposite the shroud (3), and a cavity (9) at the flow entrance into the labyrinth seal, the cavity (9) being formed by the turbine casing (6), the first radial sealing strip (5), the shroud (3) and an adjacent wall upstream, **characterized in that** the cavity (9), in order to cover its flow inlet, has a further sealing strip (11), which is of flexible design and in axial orientation at least partly covers the flow inlet to the cavity (9) between the adjacent wall upstream of the moving blade (1) and the upstream side (17) of the shroud (3), the further flexible sealing strip (11) being directed towards the shoulder of the shroud (3) of the moving blade (1) and running at an angle to the shaft (7) which corresponds to the cone angle of the turbine casing (6).

2. Axial-flow turbomachine according to Claim 1, **characterized in that** there is a distance (a) between the end edge of the sealing strip (11) for covering the flow inlet to the cavity (9) and the moving blade (1), which distance (a) allows a differential expansion between the stationary and rotating parts of the turbomachine.

3. Axial-flow turbomachine according to Claim 2, **characterized in that** the sealing strip (11) for covering the flow inlet to the cavity (9) is fastened to the turbine casing (6) radially opposite the shroud (3) and is of curved design by virtue of the fact that it extends along the wall of the cavity (9) and over the flow inlet of the cavity (9).

4. Axial-flow turbomachine according to Claim 2, **characterized in that** the cavity (9) is located at the inlet to the labyrinth seal of the penultimate moving blade (1) of a turbine section, and the sealing strip (11) for covering the flow inlet to the cavity (9) is fastened to the turbine casing (6) upstream of the penultimate moving blade (1).

5. Axial-flow turbomachine according to Claim 2, **characterized in that** the turbine casing (6) is formed with a throat (14), which projects into the cavity (9) and extends downstream of the guide-blade root (8), and the sealing strip (11) for covering the flow inlet into the cavity (9) is fastened to that side (15) of the throat (14) which faces the shaft (7).

6. Axial-flow turbomachine according to either of Claims 3 or 5, **characterized in that**, from the fastening of the sealing strip (11) for covering the flow inlet to the cavity (9), a part (11') of the sealing strip (11) extends from the throat (14) in the direction of the surface of the shroud (3) and makes a seal relative to the shroud (3).

7. Axial-flow turbomachine according to Claim 6, **characterized in that** that part (11') of the sealing strip (11) which extends to the shroud (3) runs rectilinearly and radially.

8. Axial-flow turbomachine according to Claim 6, **characterized in that** that part (11') of the sealing strip (11) which extends to the shroud (3) has a curvature of up to 180°.

9. Axial-flow turbomachine according to Claim 8, **characterized in that**, to allow thermal path expansions of the curved part (11') of the sealing strip (11) in the radial direction, the side (14') of the throat (14) is angled toward the casing (6).

10. Axial-flow turbomachine according to Claim 9, **characterized in that** the shroud (3), at its upstream side (17), has an overhang (13), which is angled away from the radial in the direction of the adjacent guide-blade root (8) upstream.

11. Axial-flow turbomachine according to Claim 10, **characterized in that** the adjacent guide-blade root (8) has a niche (18) and the sealing strip (11) runs along the wall of the niche (18).

12. Axial-flow turbomachine according to Claim 11, **characterized in that** the shroud (3), at its upstream side, has a niche (25) at its shoulder and this niche (25) provides space for the end of the sealing strip (11) for covering the inlet of the cavity (9).

13. Axial-flow turbomachine according to one of Claims 3 to 5, **characterized in that** the sealing strip (11) for covering the flow inlet to the cavity (9) is caulked, riveted, spot-welded or screwed on.

## Revendications

1. Turbomachine à circulation axiale, comprenant un carter de turbine (6) présentant un angle de cône, des aubes mobiles (1) ancrées dans un arbre (7) et des aubes directrices (2) ancrées respectivement au moyen d'une base d'aube mobile (8) dans le carter de turbine (6), et un joint à labyrinthe prévu respectivement entre les aubes mobiles (1) et le carter de turbine (6), chaque joint à labyrinthe présentant un bandeau de recouvrement (3) de forme annulaire disposé sur les aubes directrices (1), une ou plusieurs bandes d'étanchéité droites (5), s'étendant radialement, fixées sur le carter de turbine (6) radialement par rapport au bandeau de recouvrement (3), et au niveau de l'entrée de l'écoulement dans le joint à labyrinthe, une cavité (9), qui est formée par le carter de turbine (6), la première bande d'étanchéité radiale (5), le bandeau de recouvrement (3) et une paroi adjacente en amont,
**caractérisée en ce que**
la cavité (9) présente, pour le recouvrement de son entrée pour l'écoulement, une bande d'étanchéité supplémentaire (11) qui est flexible et qui, dans l'orientation axiale, recouvre au moins partiellement l'entrée pour l'écoulement vers la cavité (9) entre la paroi adjacente en amont de l'aube mobile (1) et le côté (17) orienté vers l'amont du bandeau de recouvrement (3), la bande d'étanchéité flexible supplémentaire (11) étant orienté vers le début du bandeau de recouvrement (3) de l'aube mobile (1) et s'étendant suivant un certain angle par rapport à l'arbre (7), lequel correspond à l'angle de cône du carter de turbine (6).

2. Turbomachine à circulation axiale selon la revendication 1,
**caractérisée en ce qu'**il
existe entre l'arête d'extrémité de la bande d'étanchéité (11) pour le recouvrement de l'entrée pour l'écoulement vers la cavité (9) et l'aube mobile (1) une distance (a) qui permet une dilatation différentielle entre les pièces stationnaires et rotatives de la turbomachine.

3. Turbomachine à circulation axiale selon la revendication 2,
**caractérisée en ce que**
la bande d'étanchéité (11) pour le recouvrement de l'entrée pour l'écoulement vers la cavité (9) est fixée sur le carter de turbine (6) radialement par rapport au bandeau de recouvrement (3) et est réalisée avec une forme courbe, en s'étendant le long de la paroi de la cavité (9) et sur l'entrée pour l'écoulement de la cavité (9).

4. Turbomachine à circulation axiale selon la revendication 2,
**caractérisée en ce que**
la cavité (9) se trouve à l'entrée du joint à labyrinthe de l'avant-dernière aube mobile (1) d'une turbine partielle et la bande d'étanchéité (11) pour le recouvrement de l'entrée pour l'écoulement vers la cavité (9) est fixée en amont de la première aube mobile (1) sur le carter de turbine (6).

5. Turbomachine à circulation axiale selon la revendication 2,
**caractérisée en ce que**
le carter de turbine (6) est réalisé avec un retrait (14) qui pénètre dans la cavité (9) et qui s'étend depuis la base de l'aube directrice (8) vers l'aval, et la bande d'étanchéité (11) pour le recouvrement de l'entrée pour l'écoulement dans la cavité (9) est fixée du côté (15) du retrait (14) tourné vers l'arbre (7).

6. Turbomachine à circulation axiale selon l'une quelconque des revendications 3 ou 5,
**caractérisée en ce que**
depuis la fixation de la bande d'étanchéité (11) pour le recouvrement de l'entrée pour l'écoulement vers la cavité (9), une partie (11') de la bande d'étanchéité (11) s'étend depuis le retrait (14) dans la direction de la surface du bandeau de recouvrement (3) et réalise l'étanchéité contre le bandeau de recouvrement (3).

7. Turbomachine à circulation axiale selon la revendication 6,
**caractérisée en ce que**
la partie (11') de la bande d'étanchéité (11) qui s'étend jusqu'au bandeau de recouvrement (3) s'étend de manière rectiligne et radiale.

8. Turbomachine à circulation axiale selon la revendication 6,
**caractérisée en ce que**
la partie (11') de la bande d'étanchéité (11) qui s'étend jusqu'au bandeau de recouvrement (3) présente une courbure allant jusqu'à 180°.

9. Turbomachine à circulation axiale selon la revendication 8,
**caractérisée en ce que**
pour garantir des dilatations thermiques de la partie courbe (11') de la bande d'étanchéité (11) dans la direction radiale, le côté (14') du retrait (14) est coudé vers le carter (6).

10. Turbomachine à circulation axiale selon la revendication 9,
**caractérisée en ce que**
le bandeau de recouvrement (3) présente au niveau de son côté (17) orienté vers l'amont un porte-à-faux (13) qui est coudé à l'écart de la direction radiale dans la direction de la base d'aube directrice (8) voisine dans le sens amont.

11. Turbomachine à circulation axiale selon la revendication 10,
**caractérisée en ce que**
la base d'aube directrice (8) voisine présente un renfoncement (18) et la bande d'étanchéité (11) s'étend le long de la paroi du renfoncement (18).

12. Turbomachine à circulation axiale selon la revendication 11,
**caractérisée en ce que**
le bandeau de recouvrement (3) présente sur son côté orienté vers l'amont au niveau de son commencement un renfoncement (25) qui fournit de la place à l'extrémité de la bande d'étanchéité (11) pour le recouvrement de l'entrée de la cavité (9).

13. Turbomachine à circulation axiale selon l'une quelconque des revendications 3 à 5,
**caractérisée en ce que**
la bande d'étanchéité (11) pour le recouvrement de l'entrée pour l'écoulement vers la cavité (9) est encastrée, rivetée, soudée par points, ou vissée.
